# EUROPEAN PATENT SPECIFICATION

(11) **EP 4 658 203 B1**
(45) Date of publication and mention of the grant of the patent: **25.02.2026**
(21) Application number: 24742944.2
(22) Date of filing: 13.07.2024
(51) Int. Cl.: A61C 13/00

(54) **COMPUTER-IMPLEMENTED METHOD AND CAD SYSTEM FOR PROSTHETIC DENTAL PREPARATION**
COMPUTER-IMPLEMENTIERTE VERFAHREN UND CAD-SYSTEME FÜR DIE ZAHNPROTHETISCHE PRÄPARATION
MÉTHODES MISES EN OEUVRE PAR ORDINATEUR ET SYSTÈMES CAD POUR LA PRÉPARATION DE PROTHÈSES DENTAIRES

(30) Priority: 03.08.2023 EP 23189602
(43) Date of publication of application: 10.12.2025
(73) Proprietor: Digicuto, 13008 Marseille (FR)
(72) Inventor: KOUBI, Stefan, 13008 Marseille (FR); GUREL, Galip, 13008 Marseille (FR); TOURBAH, Karim, 13008 Marseille (FR)
(74) Representative: A.P.I. Conseil
(86) International application number: PCT/EP2024/069954
(87) International publication number: WO 2025/026709

(56) References cited:
- WO-A1-2021/262336
- US-A1- 2020 100 863
- US-A1- 2021 000 574
- US-A1- 2022 110 724

## Description

### Technical Field

The subject application relates to a computer-implemented method and a CAD system for prosthetic dental preparation. Similar methods and systems are known from WO2021262336A1.

### Background Art

Prosthetic dental restoration is a conventional method to repair the shape and function of a defective tooth. However, the process of preparing a tooth for such a restoration, from preparation margin creation to the final placement of the prosthetic dental restoration, is not without its challenges.

In the current practice, dentists shape the tooth and create a preparation margin, then use a 3D dental scanner to create a digital model. The model is then sent to a dental laboratory for the design of a custom-fit prosthetic dental restoration. The dental technician uses CAD software and specific algorithms to detect the preparation margin accurately.

Despite these advanced techniques, issues can arise if the preparation margin is found to be insufficient or overprepared. If detected during the design process, it may cause delays, as the dentist may need to redo the tooth preparation.

If inadequacies in the preparation margin are discovered after the final placement of the prosthetic dental restoration, it can lead to significant problems for the patient. These can range from bacteria accumulation and tooth decay in hard-to-reach areas around the prosthetic dental restoration to discomfort and pain due to an ill-fitting restoration.

Remedying these issues often requires additional appointments, time, and cost. In some cases, dentists may try to make adjustments without removing the prosthetic dental restoration completely, but this is not always feasible.

Therefore, a key objective of the present application is to introduce a novel process that eliminates the risk of late discovery of inadequate tooth preparation for a prosthetic dental restoration.

### Summary of the subject application

As described in the accompanying claims, the subject application provides systems and methods for increasing the precision, efficiency, and personalization of dental restoration preparation, leading to better patient outcomes and a smoother, more successful dental restoration process.

Dependent claims describe specific embodiments of the subject application.

These and other aspects of the subject application will be apparent from an elucidated based on the embodiments described hereinafter.

### Brief Description of Drawings

Further details, aspects and embodiments of the subject application will be described, by way of example only, with reference to the drawings. In the drawings, like reference numbers are used to identify like or functionally similar elements. Elements in the figures are illustrated for simplicity and clarity and have not necessarily been drawn to scale. Elements indicated by a solid line are mandatory, while elements indicated by a dotted line are optional.
Figure 1 shows a schematic flow diagram of method according to the subject application.
Figure 2 shows a front view of a 3D digital dental model, according to the subject application.
Figure 3 shows another front view of a 3D digital dental model, according to the subject application.
Figure 4 shows some steps of the method of figure 1.
Figure 5 shows a block diagram of a system according to the subject application.

### Description of Embodiments

Because the illustrated embodiments of the subject application may, for the most part, be composed of components known to the skilled person, details will not be explained in any greater extent than that considered necessary for the understanding and appreciation of the underlying concepts of the subject application, in order not to obfuscate or distract from the teachings of the subject application.

### Problem solved by the subject application

Inventors have found a way to prevent discovering too late that a tooth is not adequately prepared for a prosthetic dental restoration.

The technical problem solved by the subject application is the lack of precision, efficiency, and personalization in the traditional process of preparing for a dental restoration. Traditional methods often rely on manual processes, which can lead to errors, discomfort for the patient, and less than optimal results.

### Solution of the subject application

This subject application, however, uses advanced technology to automate and streamline the process. By creating and manipulating 3D models, it allows for highly accurate and personalized dental restoration planning. It also identifies and prepares the exact areas where the prosthetic dental restoration will be placed, ensuring a perfect fit and a successful procedure.

In particular, the subject application brings about a highly precise and efficient approach to dental restoration preparation.

In fact, starting with a 3D model that digitally represents the patient's natural teeth and gums, the subject application uses automatic determination to identify where the intended prosthetic dental restoration should be placed. This delineation between restoration zones and non-restoration zones is crucial, ensuring the prosthetic dental restoration fits perfectly without affecting areas that should remain untouched.

Next, the subject application increases the perceptibility of non-restoration zones on the initial tooth model, creating a pre-preparation tooth model. This makes it easier to distinguish between areas that need to be prepared for the prosthetic dental restoration and areas that don't.

Then, the subject application obtains a wax-up model, a 3D digital representation of the proposed changes to the patient's teeth. This provides a visual guide of the anticipated final outcome of the dental restoration process.

Further, the subject application aligns the pre-preparation tooth model or the initial tooth model with the wax-up model further to ensure accuracy and precision. This alignment helps to identify any discrepancies between the planned restoration and the patient's current dental situation.

Still further, the subject application inward offsets from the surface of the wax-up model to create offset intrusion zones in the pre-preparation tooth model or in the initial tooth model. These zones represent areas where the inward offset penetrates the patient's natural tooth.

Finally, the subject application prepares the surface of the pre-preparation tooth model or the surface of the initial tooth model that coincides with the offset intrusion zones, creating a final tooth preparation model. This highlights the exact areas where the prosthetic dental restoration will be placed, ensuring a perfect fit and a successful dental restoration procedure.

Overall, the subject application achieves a technical effect of highly accurate, efficient, and personalized dental restoration planning. It automates several steps that were previously manual, reducing the risk of errors and improving patient outcomes.

### First aspect of the subject application: a computer-implemented method 100

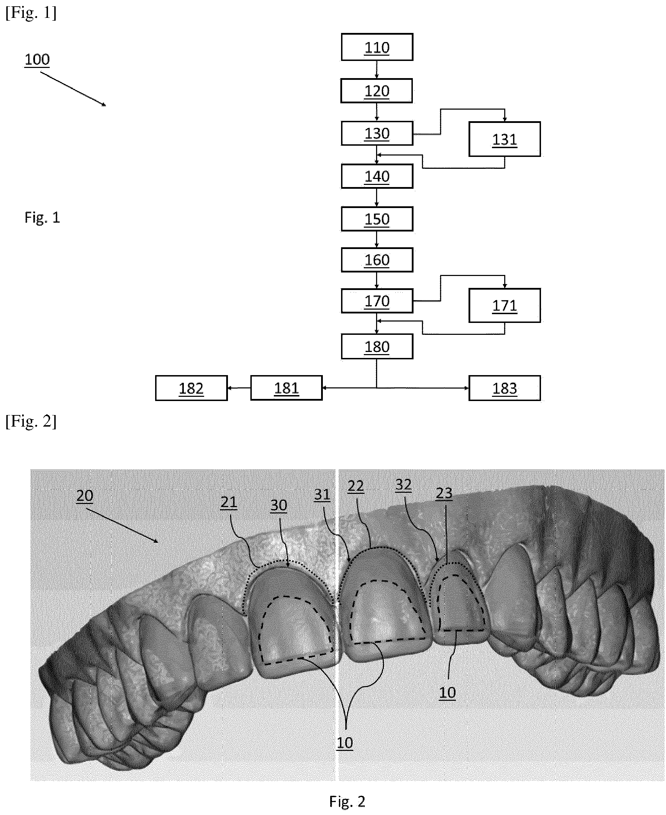

As illustrated in figure 1, the first aspect of the subject application relates to a computer-implemented method 100 that uses a Computer-Aided Design (CAD) system.

In other words, the subject application involves a method that is implemented on a computer and that utilizes a CAD system.

As generally known in the art of dental prosthetic dental restorations, a CAD system allows dental professionals to create precise and tailored designs digitally, which can then be used to produce the physical dental piece, often through methods like 3D printing or milling.

In the subject application, the computer-implemented method 100 is designed for digitally preparing one or more natural teeth to receive or fit a specified type of intended prosthetic dental restoration.

As used herein, 'natural teeth' refers to the original teeth that a person has grown naturally, as opposed to artificial or prosthetic dental restoration teeth. These can include incisors, canines, premolars, and molars.

Also, 'receive or fit' refers to the process of preparing natural teeth so they can accommodate or securely hold a dental prosthetic dental restoration.

Furthermore, an 'intended prosthetic dental restoration' refers to a future plan to use an artificial replacement, such as crowns, bridges, dentures, inlays, onlays, or veneers, to restore the function and aesthetics of one or more damaged or missing teeth. Usually, these restorative dental procedures often involve adding material (like fillings, crowns, or veneers) to the teeth, thereby increase the overall volume of the restored tooth.

In other words, the computer-implemented method 100 is specifically created to prepare natural teeth digitally for a certain type of dental restoration.

Dental restoration here refers to the procedure of restoring the function and integrity of the tooth damaged by caries or external trauma or for aesthetic reasons.

In particular, the computer-implemented method 100 involves preparing a digital model of the patient's natural teeth. This preparation is made with the goal of making sure that the teeth are ready to receive or fit a particular type of dental restoration.

The type of dental restoration is specified or chosen beforehand. This could be anything from a crown to a veneer to a filling, depending on what the patient needs.

This helps the dentist planning a dental procedure in advance to make sure it's as effective and precise as possible.

The figure 2 illustrates the intended prosthetic dental restorations which are veneers 10.

The first step 110 of the computer-implemented method 100 involves obtaining a first 3D dental model, known as the initial tooth model. The initial tooth model digitally represents one or more natural teeth of a patient, along with the associated qum. At this stage, each natural tooth is not yet prepared for receiving or being fitted with a prosthetic dental restoration.

As used herein, '3D dental model' refers to a three-dimensional digital representation of a patient's teeth and gums, that is created or acquired.

In a first example, the geometry of a 3D dental object is represented as a collection of interconnected triangles or facets. For instance, this is the case in the following design file formats: STL, PLY, VRML, X3D and Collada.

In a second example, the geometry of a 3D dental object is represented as a collection of control points and weights. For instance, this is the case in the following design file formats: IGES, IGS, STEP, and SAT.

As used herein, the 'initial tooth model' shows the current state of the patient's natural teeth and gums before any dental work is done on the teeth.

However, the 'initial tooth model' may mirror alterations resulting from procedures such as gumline repositioning, gum grafts, or any other treatments related to the gums that have already been carried out.

Hence, the 'initial tooth model' serves as a starting point for planning subsequent dental restoration work.

The figure 2 illustrates the initial tooth model 20.

In a particular embodiment of step 110, the initial tooth model is obtained from an intraoral dental 3D scanner configured for 3D scanning and recording the 3D geometry of at least part of the oral cavity of the patient.

In other words, in that particular embodiment, an intraoral dental 3D scanner is engineered to perform 3D scanning of the oral cavity for capturing the three-dimensional geometry of the patient's teeth and gums.

The resulting output, known as the initial tooth model, is a highly detailed 3D representation of the patient's oral cavity. The initial tooth model is of critical importance as it serves as a baseline or starting point for dental procedures.

By obtaining the initial tooth model, dentists can gain a comprehensive understanding of the patient's current dental status. This knowledge contributes to more accurate and efficient planning and execution of dental procedures, ultimately leading to better outcomes for the patient.

Next, in step 120, the computer-implemented method 100 automatically determines one or more preparation margin lines for one or more natural teeth.

In other words, after the initial tooth model is created or acquired, the next step involves identifying where exactly the dental restoration needs to be placed on each tooth that requires work. This process is referred to as determining the 'preparation margin lines'.

The preparation margin lines represent individual boundaries on the initial tooth model. They delineate one or more restoration zones from one or more non-restoration zones.

As used herein, 'individual' emphasizes that each preparation margin line represents a distinct or separate boundary. It suggests that multiple preparation margin lines can exist, and each one has its own unique role in delineating the restoration zones from the non-restoration zones.

In other words, the preparation margin lines can be thought of as a blueprint or a map that differentiate between these two types of zones.

In particular, the restoration zones represent where the prosthetic dental restoration should be placed on the surface areas of the initial tooth model.

In other words, the preparation margin lines designate the specific areas on the teeth where the dental restoration, such as a crown, bridge, or implant, is intended to go. These marked areas are known as 'restoration zones'.

In contrast, the non-restoration zones represent surface areas of the initial tooth model that should remain free from prosthetic dental restoration placement.

In other words, there are parts of the teeth that won't be receiving any dental restoration. These areas are termed 'non-restoration zones'.

Further, the determination of the preparation margin lines is based on the initial tooth model and the corresponding type of intended prosthetic dental restoration.

In other words, the determination of the margin lines is influenced by both the initial tooth model and the specific type of dental restoration that's planned.

In a particular example, the determination of the margin lines is performed according to various algorithms.

In particular, 'Edge detection algorithms' can be used. They analyse images to identify where one element ends and another begins. Well-known algorithms in this category include Sobel, Prewitt, Roberts, and Canny.

'Contour detection algorithms' are another useful tool that can be used. These algorithms trace the boundaries of objects within images, similar to how an artist might sketch an outline. The Active Contour algorithm is particularly common.

'Machine learning algorithms' are also available. These algorithms learn from a set of examples and apply that knowledge to new data. Notable examples include Support Vector Machines (SVM), Decision Trees, and Deep Learning Neural Networks.

Finally, one can use 'segmentation algorithms' for partitioning an image into multiple segments. They can be thought of as dividing a dental model into distinct sections. Watershed and K-means clustering algorithms are commonly used in this context.

In a particular embodiment, the preparation margin lines are defined in relation to a reference point. This reference point can be selected from a few options. It could be the gingival margin, the interproximal contact point where a restoration would meet adjacent teeth, or the overall anatomy of the tooth being restored.

In other words, the particular embodiment relates to how the preparation margin lines, which are essentially guidelines used to plan where a dental restoration will go, are determined.

These preparation margin lines are defined in relation to a reference point. This reference point is a specific area in the mouth that helps in setting these guidelines.

However, this reference point is not fixed and can be selected from a few options.

It could be the gingival margin, which is the edge of the gum tissue that surrounds the teeth.

In that case, as illustrate in figure 2, this would give three types of margin lines,
- the subgingival preparation margin 21, where the margin line is prepared in a position that is closer to the tooth's root and under the gum tissue, therefore, it's below the gum line 30,
- the equigingival preparation margin 22, where the margin line is prepared right at the point where the tooth meets the gum, which is the gum line 31, and
- the supragingival preparation margin 23, where the margin line is prepared in a position closer to the tooth's biting surface and further from the tooth's root, consequently, it's above the gum line 32,
where 'above' refers to a position closer to the tooth's biting surface and further from the tooth's root, while 'below' refers to a position closer to the tooth's root and further from the tooth's biting surface.

Another option is the interproximal contact point, which is an area where a restoration makes contact with adjacent teeth. This is known as the interproximal preparation margin, which allows the prosthetic dental restoration can be designed to fit naturally into the existing dentition.

Finally, it could also be the overall anatomy of the tooth being restored, meaning the general shape and structure of the tooth. Here, the margin line is defined based on the shape, size, and condition of the tooth that's being restored. This is often a customized approach where the dentist decides the margin based on the specific requirements of the tooth and restoration. This might involve a combination of supragingival, subgingival, equigingival and interproximal preparation margins, depending on the tooth's needs.

In step 130, the computer-implemented method 100 prepares the surface of the initial tooth model that coincides with the non-restoration zones. This action increases its perceptibility. As a result, one or more prepared margins are obtained, and a second 3D dental model, the pre-preparation tooth model, is created.

In other words, in step 130, the computer-implemented method 100 works on the surface of the initial tooth model. But it's not working on the whole initial tooth model, just the areas that have been marked as non-restoration zones. Those are the parts of the teeth that won't be getting any dental work.

By preparing these non-restoration zones, they become more noticeable or perceptible. This could involve a number of things, like changing the color or texture of these areas in the initial tooth model.

Following these modifications, what we obtain are 'preparation margins'. These preparation margins are essentially the boundary lines between the non-restoration zones and the areas where dental work will be done.

After these steps, a second 3D model of the teeth is created. This one is called the pre-preparation tooth model. It's like an updated map that shows not just where the dental work is going to go, but also clearly distinguishes the areas where no work will be done.

This helps in planning the dental procedure in a more detailed and precise way. The clearer each area is, the easier it is to plan and carry out the dental restoration.

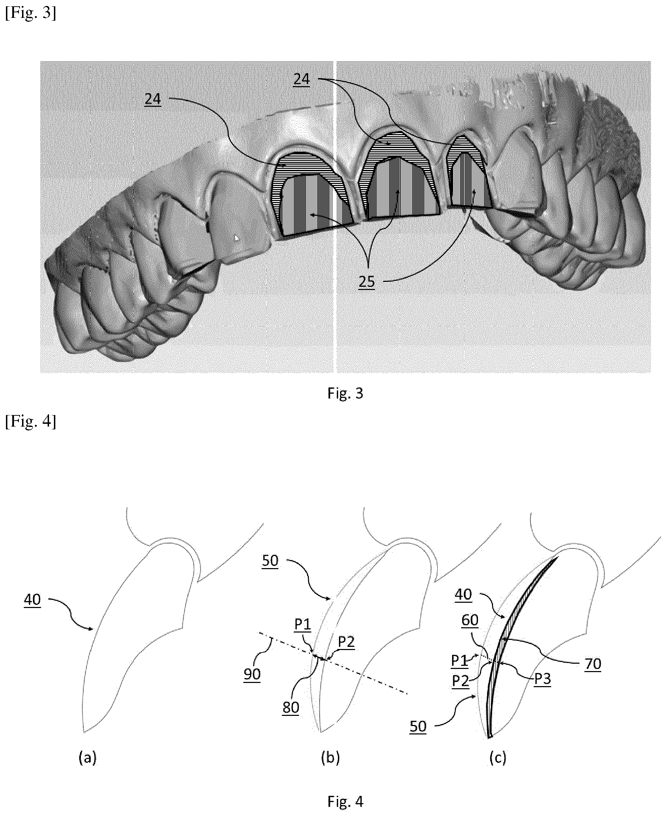

The figure 3 illustrates subgingival preparation margins 24.

In a particular embodiment, the preparation step 130 of the surface of the initial tooth model includes a step of digital sculpting 131. This digital sculpting 131 occurs through the surface of the initial tooth model.

In other words, this specific version of the computer-implemented method 100 is about how the surface of the initial tooth model is prepared, through a process known as digital sculpting.

In this context, digital sculpting means adjusting or modifying the initial tooth model. Specifically, this sculpting is performed on the surface of the initial tooth model. The outcome is the pre-preparation tooth model, which accurately represents the patient's teeth as they currently are, and it includes distinct markers indicating where dental procedures will be carried out.

In a particular example, digital sculpting involves a variety of tools such as push/pull tools to manipulate the shape and size of the initial tooth model, smoothing tools to soften or blend rough edges, and texture brushes to add detailed surfaces or patterns. It also includes tools for scaling, rotating, and moving the initial tooth model or parts of it. Additionally, digital sculpting utilizes advanced techniques such as mesh editing for creating complex geometries and boolean operations for adding, subtracting, or intersecting shapes. For more precision, there are also cutting or slicing tools that can segment the initial tooth model into manageable pieces. Lastly, layering tools allow for working on different parts of the initial tooth model independently, which can then be merged to form the final sculpture.

To understand the foregoing, one may picture an artist manipulating a clay model, adding and removing clay to morph it into the final statue. Digital sculpting is very similar to that, but it's executed on a computer with a digital model of the teeth.

This aids in preparing the teeth in the initial tooth model for the intended dental restoration.

In an example of the particular embodiment, the digital sculpting step 131 involves sculpting through the surface of the initial tooth model. In particular, the sculpting process includes the application of a margin design. The margin design can be chosen from several options. These options include a chamfer, a deep chamfer, a shoulder, a rounded shoulder, a modified shoulder, a shoulder-bevel, a feather-edge, a Beveled, a Knife-Edge. Alternatively, a suitable combination of these designs can be chosen.

In other words, this example of the particular embodiment involves a digital sculpting process that applies a specific design pattern on the initial tooth model. These patterns, known as margin designs, are essentially the blueprints used to prepare the teeth for prosthetic dental restoration.

There are numerous margin designs to choose from, depending on the type of dental restoration needed. For instance, a chamfer might be used for crowns or veneers, where the margin design creates a sloping edge on the tooth for the crown or veneer to fit snugly.

Likewise, a shoulder margin design could be used for dental implants, where a flat horizontal edge is created to securely position the implant. The shoulder-bevel, a variation of the shoulder, adds a slant to the flat edge for a more precise fit.

Other designs include deep chamfer, rounded shoulder, modified shoulder, feather-edge, Beveled, and Knife-Edge. These designs cater to different types of dental restorations, each corresponding to a specific treatment requirement.

The computer-implemented method 100 can choose any of these designs, or even a suitable combination of them, depending on what best suits the patient's particular dental situation.

Further, step 140 of the computer-implemented method 100 involves obtaining a third 3D dental model, known as the wax-up model. This model digitally represents proposed changes and/or improvements to the natural teeth. In doing so, it illustrates the anticipated final outcome of the prosthetic dental restoration.

In other words, in step 140, a third 3D dental model is created or acquired. This model is referred to as the 'wax-up model'. The term 'wax-up' is traditionally used in dental prosthetic dental restorations to refer to a model made from wax that shows proposed changes to a patient's teeth.

In this digital context, the wax-up model is a computer-generated model that shows proposed changes or improvements to the patient's natural teeth. These changes represent what the dentist plans to do in the dental restoration procedure.

So, it's a bit like a before-and-after picture. The 'before' is the patient's original teeth, and the 'after' is what those teeth are anticipated to look like once the dental restoration is complete. This wax-up model shows the 'after' part, illustrating the final results that the dentist aims to achieve with the prosthetic dental restoration.

This helps both the dentist and the patient visualize the expected outcome before any actual dental work is done.

In step 150, the computer-implemented method 100 aligns the pre-preparation tooth model or the initial tooth model with the wax-up model.

In other words, in step 150, two digital 3D models of the patient's teeth are matched up or 'aligned'.

The first model is the pre-preparation tooth model. This is the model which shows the patient's teeth as they currently are, but with clear indications of where dental work will be done and where it won't. However, the first model can be the initial tooth model as already described above.

The figure 4(a) illustrates a side view of a single tooth 40 of the pre-preparation tooth model or the initial tooth model.

The second model is the wax-up model. This model shows what the patient's teeth are expected to look like after the dental restoration.

As generally known in the art of dental prosthetic dental restorations, since the wax-up model represents the patient's teeth after restoration, it encompasses the pre-preparation tooth model. This is because restorative dental procedures often involve adding material (like fillings, crowns, or veneers) to the teeth, which could increase the overall volume.

In certain cases, the wax-up model aligns within or intrudes into the pre-preparation tooth model. This is particularly prevalent in restorative dental procedures that primarily involve removing material from the teeth. For certain jaw types, where the teeth tend to protrude outward, the wax-up model may need to be strategically positioned within the initial tooth model. This often necessitates a two-step process of first reducing the tooth structure and then sculpting the offset intrusion zone, before the veneer or other restorative material is placed. These techniques are typically classified as subtractive restorations, and they may result in a decrease in the overall volume of the dental structure.

Hence, by aligning these two models, the computer-implemented method 100 can compare the current state of the patient's teeth with the intended final result. It's a bit like overlaying two pictures to see what changes from one to the next.

This helps the dentist to see how they need to transform the current state of the teeth to achieve the desired result. It provides a roadmap of sorts for the dental procedure.

In a particular example, the aligning is performed according to various algorithms that can be selected among, Iterative Closest Point, Thin Plate Spline, Robust Point Matching, Gaussian Mixture model, Normal Distributions Transform, Robust Point Matching and Coherent Point Drift.

The figure 4(b) illustrates a side view of a single tooth 40 of the pre-preparation tooth model or the initial tooth model aligned with the associated wax-up 50 of the wax-up model.

Further, in step 160, the computer-implemented method 100 offsets inwardly from the surface of the wax-up model. This offset corresponds to one or more predetermined offsets associated with the type of intended prosthetic dental restoration. The offset creates one or more offset intrusion zones within the pre-preparation tooth model or within the initial tooth model. Each offset intrusion zone represents an area where the inward offset penetrates the pre-preparation tooth model or the initial tooth model.

In other words, step 160 involves pushing the surface of the wax-up model inwards in specific areas, kind of like making little dents in it. These adjustments are carefully calculated based on the type of dental repair work that is planned.

These inward adjustments, or 'offsets', create what is called 'offset intrusion zones' in the pre-preparation tooth model or in the initial tooth model. These zones are areas where the adjustments go into the pre-preparation tooth model or into the initial tooth model.

Said differently, an offset, in this context, is like a buffer zone or a gap carved within the surface of the wax-up model. This offset is 'offset' or extended inwardly from the surface of the wax-up model, towards the surface of the pre-preparation tooth model or the initial tooth model. This extension is made along a given plane.

By adding this offset, the computer-implemented method 100 creates the 'offset intrusion zones' within the pre-preparation tooth model or within the initial tooth model. These zones represent areas where the offset penetrates, or goes into, the pre-preparation tooth model or the initial tooth model.

The offset may comprise one or more predetermined offsets. These are pre-decided measurements depends on the type of dental restoration that is planned, and a corresponding given location on the wax-up model.

The foregoing helps the dentist plan for the dental restoration in a way that's accurate and safe for the rest of the patient's teeth.

The figure 4(c) corresponds to figure 4(b), but additionally illustrates the offset 60 and the offset intrusion zone 70.

In an example, let's consider a first given point P1 located on the surface of the wax-up model, where an inter-surface space 80, which is the distance from this first given point P1 to a second given point P2 located on the same plane 90 but on the surface of the pre-preparation tooth model, is recorded as 0.3 mm. Let's also consider an offset of 0.5 mm for a planned veneer. In that case, the thickness of the offset intrusion zone 70 within the pre-preparation tooth model will be 0.2 mm (i.e., 0.5 mm - 0.3 mm) between the second given point P2 and a third given point P3 located on the plane 90 on the surface of the pre-preparation tooth model after it has been carved to form the intrusion zone 70.

Finally, in step 170, the computer-implemented method 100 prepares the surface of the pre-preparation tooth model or the surface of the initial tooth model that coincides with the offset intrusion zones. This preparation increases its perceptibility, yielding one or more tooth prepared zones. Consequently, a fourth 3D dental model, known as the final tooth preparation model, is created.

In other words, step 170 involves preparing the surface of the pre-preparation tooth model or the surface of the initial tooth model, specifically the parts that line up with the offset intrusion zones. The offset intrusion zones, as explained above, are the areas where the offset, or extra space, was added in the previous step 160.

By preparing these areas, they become more noticeable, or perceptible. This could involve a number of things, like highlighting these areas in some way on the pre-preparation tooth model.

This process results in what are called 'tooth prepared zones'. These zones are essentially the areas of the teeth that have been prepared and are ready for the dental restoration.

Once this is done, a fourth 3D model of the teeth is created. This one is called the final tooth preparation model. It's like an updated blueprint which shows not just the areas where the dental work is going to go, but also clearly distinguishes the areas that are ready for the dental restoration.

This helps in planning the dental procedure in a more detailed and precise way.

The clearer each area is, the easier it is to plan and carry out the dental restoration.

Furthermore, the prepared teeth within the final tooth preparation model can also be utilized to digitally design the intended dental restoration corresponding to the tooth prepared zones.

The figure 3 illustrates tooth prepared zones 25.

In a particular embodiment, the preparation 170 of the surface of the pre-preparation tooth model or the surface of the initial tooth model involves a step of digital sculpting 171. This digital sculpting 171 takes place through the surface of the pre-preparation tooth model or the surface of the initial tooth model.

In other words, that particular embodiment relates to specific ways that the surface of the pre-preparation tooth model or the surface of the initial tooth model is prepared, namely through a process called digital sculpting.

In this context, digital sculpting means adjusting or modifying the pre-preparation tooth model or the initial tooth model. Specifically, this sculpting is done on the surface of the pre-preparation tooth model or on the surface of the initial tooth model. This is the model that shows the patient's teeth as they currently are, but with clear indications of where dental work will be done.

The foregoing helps to prepare the teeth in the model for the planned dental restoration.

In a particular example, digital sculpting involves a variety of tools such as push/pull tools to manipulate the shape and size of the pre-preparation tooth model or of the initial tooth model, smoothing tools to soften or blend rough edges, and texture brushes to add detailed surfaces or patterns. It also includes tools for scaling, rotating, and moving the pre-preparation tooth model or parts of it. Additionally, digital sculpting utilizes advanced techniques such as mesh editing for creating complex geometries and boolean operations for adding, subtracting, or intersecting shapes. For more precision, there are also cutting or slicing tools that can segment the pre-preparation tooth model or the initial tooth model into manageable pieces. Lastly, layering tools allow for working on different parts of the pre-preparation tooth model independently, which can then be merged to form the final sculpture.

To understand the foregoing, one may picture an artist manipulating a clay model, adding and removing clay to morph it into the final statue. Digital sculpting is very similar to that, but it's executed on a computer with a digital model of the teeth.

This aids in preparing the teeth in the model for the intended dental restoration.

In an example of the particular embodiment, the digital sculpting step 171 involves sculpting through the surface of the pre-preparation tooth model or the surface of the initial tooth model. In particular, the sculpting process includes the application of a preparation design. The preparation design can be chosen from several options. These options include a box shape for inlays, a peg shape for post and core, an undercut design for crowns, a groove design for onlays, a slot design for veneers, and a cavity design for fillings. Alternatively, a suitable combination of these designs can be chosen.

In other words, this example of the particular embodiment relates to how the digital sculpting process involves applying a specific design to the teeth in the pre-preparation tooth model. These designs are called preparation designs, and they are the shapes or patterns that are used to prepare the teeth for the dental restoration.

There are several different types of preparation designs that can be chosen from, depending on the type of dental restoration that's being done.

For example, a box shape might be used for inlays. An inlay is a type of dental restoration that fits into a hole in the tooth. Imagine a box being the hole that the inlay will fit into.

A peg shape could be used for a post and core. A post and core is a type of dental restoration that's used when a large part of the tooth is missing. The peg shape represents the post that will be inserted into the tooth.

Other designs include an undercut design for crowns, a groove design for onlays, a slot design for veneers, and a cavity design for fillings. Each of these designs corresponds to a specific type of dental restoration.

The computer-implemented method 100 can choose one of these designs, or it can use a combination of them, depending on what's best for the patient's specific situation.

### First embodiment of the first aspect of the subject application: obtaining the offset from a database

In a first aspect of the subject application, the computer-implemented method 100 includes an additional step of providing 180 an offset database. This database associates a type of intended prosthetic dental restoration with one or more predetermined offsets. The computer-implemented method 100 also includes automatically determining 181 the one or more predetermined offsets from the offset database. This determination is based on the type of intended prosthetic dental restoration.

As used herein, a 'database' is defined as being any suitable data storage system such as a relational database (e.g., an object-relational database), a triple store, a hierarchical data store, or any suitable combination thereof.

In other words, the first aspect of the subject application relates to an additional step of providing an offset database.

In particular, the offset database is a collection of information that links each type of dental restoration with one or more predetermined offsets, according to a given location.

For example, the database might say that for a crown, at a given location on a digital model of the patient's teeth, the offset should be 0.5 mm, or for a veneer, it should be 0.2 mm.

The computer-implemented method 100 includes another step of automatically determining the offset. This means that the computer-implemented method 100 can figure out on its own what the offset should be for each dental restoration.

This automatic determination is based on the type of dental restoration that's being done and a given location on a digital model of the patient's teeth.

So, if the dentist is planning to do a crown, the computer-implemented method 100 would refer to the offset database, see that the offset for a crown is 0.5 mm, and automatically apply that to the digital model of the patient's teeth at the given location on the digital model of the patient's teeth.

This helps the dentist plan for the dental restoration in a way that's accurate and safe for the rest of the patient's teeth.

### Second embodiment of the first aspect of the subject application: allowing manual adjustments on a user interface

In a second aspect of the subject application, the computer-implemented method 100 also includes the provision 182 of a user interface for the CAD system. This user interface is designed to enable a user to manually alter the outcome of one or more steps that are performed automatically.

As used herein, a 'user interface' is defined as being any suitable software rendering system for providing to and/or receiving information from a user of the user interface via a display device. The user interface may be based on one or more of the following interactions: visual, graphical, tactile, audible, sensory or the like.

In other words, the second aspect of the subject application relates to another feature of the computer-implemented method 100, which is the provision of a user interface for the CAD system.

One of the things this user interface allows users to do is manually alter the outcome of some of the steps that are done automatically. So, if the user, which in this case would most likely be the dentist or a dental technician, isn't happy with the automatic results, they can step in and make adjustments themselves.

This gives the dentist more control over the process and allows them to tailor the dental restoration to the specific needs and preferences of the patient.

### Second aspect of the subject application: a computer-readable medium

The subject application also relates to a computer-readable medium having stored thereon computer instructions which when executed, by a processor, perform the computer-implemented method 100 as described above.

### Third aspect of the subject application: a CAD System

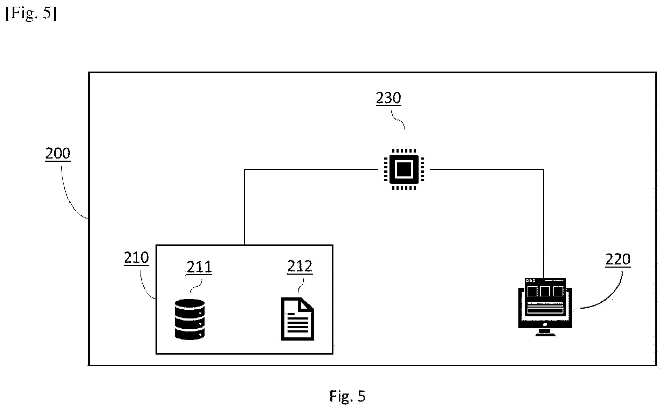

As illustrated in figure 5, the subject application also relates to a 3D Computer-Aided Design, CAD, system 200.

The 3D CAD system 200 comprises one or more memories 210, one or more user interfaces 220 and one or more processors 230.

The memory 210 is configured for storing the offset database 211 as described above.

The memory 210 is also configured for storing executable instructions 212 for performing the computer-implemented method 100 as described above.

The user interface 220 is of known type as described above.

The processor 230 is coupled with the memory 210 and the user interface 220.

The processor 230 is configured for executing the executable instructions 213.

The description of the subject application has been presented for purposes of illustration and description but is not intended to be exhaustive or limited to the application in the form disclosed. The embodiments were chosen and described to better explain the principles of the application and the practical application, and to enable the skilled person to understand the application for various embodiments with various modifications as are suited to the particular use contemplated.

## Claims

1. A computer-implemented method (100) for digitally preparing, with a Computer-Aided Design, CAD, system, one or more natural teeth for receiving or being fitted with a given type of intended prosthetic dental restoration, the computer-implemented method (100) comprising the steps of,
- obtaining (110) a first 3D dental model, called initial tooth model, that digitally represents one or more natural teeth of a patient along with the associated gum, each natural tooth being unprepared for receiving or being fitted with a prosthetic dental restoration,
- automatically determining (120), for one or more natural tooth, based on the initial tooth model and the corresponding type of intended prosthetic dental restoration, one or more preparation margin lines representing individual boundaries that delineate on the initial tooth model, one or more restoration zones from one or more non-restoration zones, the one or more restoration zones representing one or more surface areas of the initial tooth model where the prosthetic dental restoration should be placed, while the one or more non-restoration zones represent one or more surface areas of the initial tooth model that should remain free of prosthetic dental restoration placement,
- preparing (130) the surface of the initial tooth model that coincides with the one or more non-restoration zones so as to increase its perceptibility, thereby obtaining one or more prepared margins and creating a second 3D dental model, called pre-preparation tooth model,
- obtaining (140) a third 3D dental model, called wax-up model, that digitally represents proposed changes and/or improvements to the one or more natural teeth, thereby illustrating an anticipated final outcome of the prosthetic dental restoration,
- aligning (150) the pre-preparation tooth model or the initial tooth model with the wax-up model,
- offsetting inwardly (160) from the surface of the wax-up model, according to one or more predetermined offsets that are associated with the type of intended prosthetic dental restoration, to create one or more offset intrusion zones within the pre-preparation tooth model or initial tooth model, each offset intrusion zone representing an area where the inward offset penetrates the pre-preparation tooth model or the initial tooth model, and
- preparing (170) the surface of the pre-preparation tooth model or the surface of the initial tooth model that coincides with the one or more offset intrusion zones so as to increase its perceptibility, thereby obtaining one or more tooth prepared zones and creating a fourth 3D digital dental model, called final tooth preparation model.

2. The computer-implemented method (100) of claim 1 wherein preparing (130) the surface of the initial tooth model and/or preparing (170) the surface of the pre-preparation tooth model comprises digitally sculpting (131) through the surface of the initial tooth model and/or digitally sculpting (171) through the surface of the pre-preparation tooth model, respectively.

3. The computer-implemented method (100) of claim 2 wherein digitally sculpting (131) through the surface of the initial tooth model comprises digitally applying a margin design which is selected among, a chamfer, a deep chamfer preparation, a shoulder preparation, a rounded shoulder preparation, a modified shoulder preparation, a shoulder-bevel preparation, a feather-edge preparation, a Beveled preparation, a Knife-Edge preparation or any suitable combination thereof.

4. The computer-implemented method (100) of claim 2 wherein digitally sculpting (171) through the surface of the pre-preparation tooth model or the surface of the initial tooth model comprises digitally applying a preparation design, which is selected among, a box shape for inlays, a peg shape for post and core, an undercut design for crowns, a groove design for onlays, a slot design for veneers, a cavity design for fillings, or any suitable combination thereof.

5. The computer-implemented method (100) of any one of claims 1 to 4, wherein the one or more preparation margin lines are defined relative to a reference point selected among: the gingival margin, the interproximal contact point where a restoration would meet adjacent teeth, or the overall anatomy of the tooth being restored.

6. The computer-implemented method (100) of any one of claims 1 to 5, further comprising the step of,
- providing (180) an offset database associating a type of intended prosthetic dental restoration with one or more predetermined offsets, and
- automatically determining (181) the one or more predetermined offsets based on the type of intended prosthetic dental restoration.

7. The computer-implemented method (100) of any one of claims 1 to 7, further comprising the step of,
- providing (182) a user interface to the CAD system, the user interface being configured for allowing a user of the user interface to manually change an outcome of one or more step that is performed automatically.

8. A computer-readable medium having stored thereon computer instructions which when executed, by a processor, perform a computer-implemented method (100) according to any one of claims 1 to 7.

9. A 3D Computer-Aided Design, CAD, system (200) comprising,
- one or more memories (210) for storing,
- an offset database (211) associating a type of intended prosthetic dental restoration with one or more predetermined offsets, and
- executable instructions (212) for performing the computer-implemented method (100) of any one of claims 1 to 7,
- one or more user interfaces (220),
- one or more processors (230) coupled with the memory (210) and the user interface (220), and configured for executing the executable instructions (212).

## Patentansprüche

1. Computerimplementiertes Verfahren (100) zur digitalen Präparation, mit einem Computer-Aided Design, CAD, System, eines oder mehrerer natürlicher Zähne zur Aufnahme oder Einpassung eines gegebenen Typs von beabsichtigter prothetischer Zahnrestauration, wobei das computerimplementierte Verfahren (100) die folgenden Schritte umfasst
- Erhalten (110) eines ersten 3D-Zahnmodells, das Anfangszahnmodell genannt wird und das einen oder mehrere natürliche Zähne eines Patienten gemeinsam mit dem zugehörigen Zahnfleisch digital darstellt, wobei jeder natürliche Zahn nicht zum Aufnehmen oder Einpassen einer prothetischen Zahnrestauration präpariert ist,
- automatisches Bestimmen (120), für einen oder mehrere natürliche Zähne, auf der Grundlage des Anfangszahnmodells und des entsprechenden Typs von beabsichtigter prothetischer Zahnrestauration, einer oder mehrerer Präparationsrandlinien, die einzelne Grenzen darstellen, die auf dem Anfangszahnmodell eine oder mehrere Restaurationszonen von einer oder mehreren Nicht-Restaurationszonen abgrenzen, wobei die eine oder mehreren Restaurationszonen einen oder mehrere Oberflächenbereiche des Anfangszahnmodells darstellen, wo die prothetische Zahnrestauration platziert werden sollte, während die eine oder mehreren Nicht-Restaurationszonen einen oder mehrere Oberflächenbereiche des Anfangszahnmodells darstellen, die frei von prothetischer Zahnrestaurationsplatzierung bleiben sollten,
- Präparieren (130) der Oberfläche des Anfangszahnmodells, die mit der einen oder den mehreren Nicht-Restaurationszonen übereinstimmt, um ihre Erkennbarkeit zu erhöhen, wodurch ein oder mehrere präparierte Ränder erhalten werden und ein zweites 3D-Zahnmodell erzeugt wird, das Vorpräparationszahnmodell genannt wird,
- Erhalten (140) eines dritten 3D-Zahnmodells, das Wax-up-Modell genannt wird, das vorgeschlagene Änderungen und/oder Verbesserungen an dem einen oder den mehreren natürlichen Zähnen digital darstellt, wodurch ein erwartetes Endergebnis der prothetischen Zahnrestauration veranschaulicht wird,
- Ausrichten (150) des Vorpräparationszahnmodells oder Anfangszahnmodells auf das Wax-up-Modell,
- Versetzen (160), von der Oberfläche des Wax-up-Modells, gemäß einem oder mehreren vorbestimmten Versatzen, die mit dem Typ der beabsichtigten prothetischen Zahnrestauration verknüpft sind, nach innen, um eine oder mehrere Versatzintrusionszonen innerhalb des Vorpräparationszahnmodells oder Anfangszahnmodells zu erzeugen, wobei jede Versatzintrusionszone einen Bereich darstellt, wo der Versatz nach innen in das Vorpräparationszahnmodell oder das Anfangszahnmodell eindringt, und
- Präparieren (170) der Oberfläche des Vorpräparationszahnmodells oder der Oberfläche des Anfangszahnmodells, die mit der einen oder den mehreren Versatzintrusionszonen übereinstimmt, um ihre Erkennbarkeit zu erhöhen, wodurch eine oder mehrere präparierte Zahnzonen erhalten werden und ein viertes digitales 3D-Zahnmodell erhalten wird, das endgültiges Zahnpräparationsmodell genannt wird.

2. Computerimplementiertes Verfahren (100) nach Anspruch 1, wobei jeweils das Präparieren (130) der Oberfläche des Anfangszahnmodells und/oder das Präparieren (170) der Oberfläche des Vorpräparationszahnmodells das digitale Formgeben (131) durch die Oberfläche des Anfangszahnmodells und/oder das digitale Formgeben (171) durch die Oberfläche des Vorpräparationszahnmodells umfasst bzw. umfassen.

3. Computerimplementiertes Verfahren (100) nach Anspruch 2, wobei das digitale Formgeben (131) durch die Oberfläche des Anfangszahnmodells das digitale Anwenden einer Randgestaltung umfasst, die ausgewählt ist aus einer Hohlkehle, einer tiefen Hohlkehlenpräparation, einer Schulterpräparation, einer abgerundeten Schulterpräparation, einer abgewandelten Schulterpräparation, einer Schulterfasenpräparation, einer fließenden/auslaufenden Kantenpräparation, einer gefasten Präparation, einer Messerkantenpräparation oder einer beliebigen geeigneten Kombination daraus.

4. Computerimplementiertes Verfahren (100) nach Anspruch 2, wobei das digitale Formgeben (171) durch die Oberfläche des Vorpräparationszahnmodells oder die Oberfläche des Anfangszahnmodells das digitale Anwenden einer Präparationsgestaltung umfasst, die ausgewählt ist aus einer Kastenform für Inlays, einer Stiftform für Post und Core, einer Unterschnittgestaltung für Kronen, einer Rillengestaltung für Onlays, einer Schlitzgestaltung für Veneers, einer Kavitätengestaltung für Füllungen oder einer beliebigen Kombination daraus.

5. Computerimplementiertes Verfahren (100) nach einem der Ansprüche 1 bis 4, wobei die eine oder die mehreren Präparationsrandlinien in Bezug auf einen Bezugspunkt definiert werden, der ausgewählt wird aus: dem Zahnfleischrand, dem interproximalen Kontaktpunkt, wo eine Restauration auf benachbarte Zähne treffen würde, oder der Gesamtanatomie des Zahns, der restauriert wird.

6. Computerimplementiertes Verfahren (100) nach einem der Ansprüche 1 bis 5, ferner umfassend die folgenden Schritte:
- Bereitstellen (180) einer Versatzdatenbank, die einen Typ von beabsichtigter prothetischer Zahnrestauration mit einem oder mehreren vorbestimmten Versatzen verknüpft, und
- automatisches Bestimmen (181) des einen oder der mehreren vorbestimmten Versatze auf der Grundlage des Typs von beabsichtigter prothetischer Zahnrestauration.

7. Computerimplementiertes Verfahren (100) nach einem der Ansprüche 1 bis 7, ferner umfassend den folgenden Schritt:
- Bereitstellen (182) einer Benutzeroberfläche für das CAD-System, wobei die Benutzeroberfläche dazu ausgestaltet ist, es einem Benutzer der Benutzeroberfläche zu erlauben, ein Ergebnis von einem oder mehreren Schritten, der bzw. die automatisch durchgeführt wird bzw. werden, manuell zu ändern.

8. Computerlesbarer Datenträger, der darauf gespeichert Computeranweisungen aufweist, die, wenn sie von einem Prozessor ausgeführt werden, ein computerimplementiertes Verfahren (100) nach einem der Ansprüche 1 bis 7 durchführen.

9. Computergestütztes 3D-Computer-Aided-Design, CAD, System (200), umfassend:
- einen oder mehrere Speicher (210) zum Speichern,
- eine Versatzdatenbank (211), die einen Typ von beabsichtigter prothetischer Zahnrestauration mit einem oder mehreren vorbestimmten Versatzen verknüpft, und
- ausführbare Anweisungen (212) zum Durchführen des computerimplementierten Verfahrens (100) nach einem der Ansprüche 1 bis 7,
- eine oder mehrere Benutzeroberflächen (220),
- einen oder mehrere Prozessoren (230), die mit dem Speicher (210) und der Benutzeroberfläche (220) gekoppelt sind und dazu ausgestaltet sind, die ausführbaren Anweisungen (212) auszuführen.

## Revendications

1. Procédé mis en œuvre par ordinateur (100) pour la préparation de manière numérique, avec un système de conception assistée par ordinateur, CAO, d'une ou de plusieurs dents naturelles pour la réception ou l'intégration d'un type donné de restauration dentaire prothétique prévue, le procédé mis en œuvre par ordinateur (100) comprenant les étapes de,
- l'obtention (110) d'un premier modèle dentaire 3D, appelé modèle de dentition initial, qui représente de manière numérique une ou plusieurs dents naturelles d'un patient conjointement avec la gencive associée, chaque dent naturelle n'étant pas préparée pour la réception ou l'intégration d'une restauration dentaire prothétique,
- la détermination de manière automatique (120), pour une ou plusieurs dents naturelles, sur la base du modèle de dentition initial et du type correspondant de restauration dentaire prothétique prévue, d'une ou de plusieurs lignes de marge de préparation représentant des limites individuelles qui délimitent, sur le modèle de dentition initial, une ou plusieurs zones de restauration par rapport à une ou plusieurs zones de non-restauration, les une ou plusieurs zones de restauration représentant une ou plusieurs aires de surfaces du modèle de dentition initial où la restauration dentaire prothétique doit être placée, tandis que les une ou plusieurs zones de non-restauration représentant une ou plusieurs aires de surfaces du modèle de dentition initial qui doivent rester exemptes de placement de restauration dentaire prothétique,
- la préparation (130) de la surface du modèle de dentition initial qui coïncide avec les une ou plusieurs zones de non-restauration de façon à augmenter sa perceptibilité, ce qui permet d'obtenir une ou plusieurs marges préparées et de créer un deuxième modèle dentaire 3D, appelé modèle de dentition pré-préparation,
- l'obtention (140) d'un troisième modèle dentaire 3D, appelé modèle en cire, qui représente de manière numérique des changements proposés et/ou améliorations proposées pour les une ou plusieurs dents naturelles, ce qui permet d'illustrer une issue finale anticipée de la restauration dentaire prothétique,
- l'alignement (150) du modèle de dentition pré-préparation ou du modèle de dentition initial avec le modèle en cire,
- le décalage vers l'intérieur (160) par rapport à la surface du modèle en cire, selon un ou plusieurs décalages prédéterminés qui sont associés au type de restauration dentaire prothétique prévue, pour créer une ou plusieurs zones d'intrusion de décalage au sein du modèle de dentition pré-préparation ou du modèle de dentition initial, chaque zone d'intrusion de décalage représentant une aire où le décalage vers l'intérieur pénètre dans le modèle de dentition pré-préparation ou dans le modèle de dentition initial, et
- la préparation (170) de la surface du modèle de dentition pré-préparation ou de la surface du modèle de dentition initial qui coïncide avec les une ou plusieurs zones d'intrusion de décalage de façon à augmenter sa perceptibilité, ce qui permet d'obtenir une ou plusieurs zones préparées de dentition et de créer un quatrième modèle dentaire numérique 3D, appelé modèle de préparation de dentition final.

2. Procédé mis en œuvre par ordinateur (100) selon la revendication 1 dans lequel la préparation (130) de la surface du modèle de dentition initial et/ou la préparation (170) de la surface du modèle de dentition pré-préparation comprend la sculpture de manière numérique (131) à travers la surface du modèle de dentition initial et/ou la sculpture de manière numérique (171) à travers la surface du modèle de dentition pré-préparation, respectivement.

3. Procédé mis en œuvre par ordinateur (100) selon la revendication 2 dans lequel la sculpture de manière numérique (131) à travers la surface du modèle de dentition initial comprend l'application de manière numérique d'une conception de marge qui est sélectionnée parmi un chanfrein, une préparation de chanfrein profond, une préparation d'épaulement, une préparation d'épaulement arrondi, une préparation d'épaulement modifié, une préparation épaulement-biseau, une préparation de bord aminci, une préparation en biseau, une préparation de bord tranchant ou toute combinaison appropriée de ceux-ci.

4. Procédé mis en œuvre par ordinateur (100) selon la revendication 2 dans lequel la sculpture de manière numérique (171) à travers la surface du modèle de dentition pré-préparation ou la surface du modèle de dentition initial comprend l'application de manière numérique d'une conception de préparation, qui est sélectionnée parmi une forme de boîte pour les inlays, une forme de cheville pour un tenon radiculaire, une conception de contre-dépouille pour les couronnes, une conception de rainure pour les onlays, une conception de fente pour les facettes, une conception de cavité pour les plombages, ou toute combinaison appropriée de celles-ci.

5. Procédé mis en œuvre par ordinateur (100) selon l'une quelconque des revendications 1 à 4, dans lequel les une ou plusieurs lignes de marge de préparation sont définies par rapport à un point de référence sélectionné parmi : la marge gingivale, le point de contact interproximal où une restauration rencontrerait des dents adjacentes, ou l'anatomie globale de la dent en cours de restauration.

6. Procédé mis en œuvre par ordinateur (100) selon l'une quelconque des revendications 1 à 5, comprenant en outre l'étape de,
- la fourniture (180) d'une base de données de décalages associant un type de restauration dentaire prothétique prévue avec un ou plusieurs décalages prédéterminés, et
- la détermination de manière automatique (181) des un ou plusieurs décalages prédéterminés sur la base du type de restauration dentaire prothétique prévue.

7. Procédé mis en œuvre par ordinateur (100) selon l'une quelconque des revendications 1 à 7, comprenant en outre l'étape de,
- la fourniture (182) d'une interface utilisateur pour le système de CAO, l'interface utilisateur étant configurée pour permettre à un utilisateur de l'interface utilisateur de changer manuellement une issue d'une ou de plusieurs étapes qui sont réalisées automatiquement.

8. Support lisible par ordinateur ayant, stockées sur celui-ci, des instructions d'ordinateur qui, lorsqu'elles sont exécutées par un processeur, réalisent un procédé mis en œuvre par ordinateur (100) selon l'une quelconque des revendications 1 à 7.

9. Système de conception assistée par ordinateur, CAO, 3D (200) comprenant,
- une ou plusieurs mémoires (210) pour un stockage,
- une base de données de décalages (211) associant un type de restauration dentaire prothétique prévue avec un ou plusieurs décalages prédéterminés, et
- des instructions exécutables (212) pour la réalisation du procédé mis en œuvre par ordinateur (100) selon l'une quelconque des revendications 1 à 7,
- une ou plusieurs interfaces utilisateur (220),
- un ou plusieurs processeurs (230) couplés à la mémoire (210) et à l'interface utilisateur (220), et configurés pour exécuter les instructions exécutables (212).
